# EUROPEAN PATENT APPLICATION

(11) **EP 1 903 786 A1**
(43) Date of publication of application: **26.03.2008**
(21) Application number: 07116956.9
(22) Date of filing: 21.09.2007
(51) Int. Cl.: H04N 5/232

(54) **Apparatus and method for photographing panoramic image**

(30) Priority: 21.09.2006 KR 20060091718
(71) Applicant: Samsung Electronics Co., Ltd., Suwon-si Gyeonggi-do (KR)
(72) Inventor: Oh, Sang-Wook, Gyeonggi-do (KR); Oh, Yun-Je, Gyeonggi-do (KR); Cho, Sung-Dae, Gyeonggi-do (KR)
(74) Representative: Grünecker, Kinkeldey, Stockmair & Schwanhäusser Anwaltssozietät

(57) **Abstract**

Disclosed is a panoramic image photographing apparatus including a camera module for photographing an image of subject, an image processing unit for generating preview image data according to an operating mode for panoramic photographing by the camera module, a storage unit for storing data of an image panoramic-photographed from the preview image data, a controller for setting a portion of image data stored in the storage unit as a first guide region, setting a portion of the preview image data as a second guide region, and for calculating a degree of accordance between the first guide region and the second guide region and a display unit for displaying, together with the preview image data, the degree of accordance of the second guide region with the first guide region on one screen.

## Description

### Background Of The Invention

### 1. Field of the Invention

The present invention relates to digital image photographing, and more particularly to an apparatus and method for photographing a panoramic image.

### 2. Description of the Related Art

In general, a photographing unit capable of obtaining an image in a digital image photographing apparatus can acquire a scene formed at the focal distance of a lens. The acquired image exists within the range of the angle of view (in a general camera, about 30 to 50 degrees) narrower than the range (i.e., approximately 150 to 200 degrees) of the viewing angle of a person. For this reason, there is a technique referred to as a panorama photographing scheme for respectively photographing a plurality of scenes while sequentially changing a photographing angle little by little, interconnecting the photographed scenes to create a single image, and obtaining a photograph having an angle of view similar to or larger than the viewing angle of a person.

Generally, in a panorama photographing mode, a digital image photographing apparatus photographs a plurality of scenes such that they are continued in a horizontal or vertical direction, and stores the photographed scenes in a memory. Then, the images stored in the memory are properly provided to internal/external image processors and are interconnected to construct a single image. In order to remove difference of color tones and deviation of images occurring in boundaries among the scenes, multiple scenes are photographed such that boundaries of the scenes are properly overlapped, and image processing operations such as aligning, stitching and blending are performed with respect to the images which exist in the overlapped boundaries. As a result, a single image is generated by seamlessly interconnected several scenes.

An important thing to be considered for such panorama photographing is first to photograph scenes such that they are most accurately aligned. To this end, in addition to a basic scheme in which a user manually photographs an object by using an auxiliary device such as a tripod, a method has also been recently proposed, in which a corresponding photographing apparatus is mounted on a member attached to a tripod or the like, and the mounted photographing apparatus is rotated according to each scene photographing in panoramic photographing. As an example of such technology, there is a Korean Patent Application No. 2003-0052444 entitled Camera and Panorama Photographing Method Using The Same, applicant: Samsung Techwin Co., Ltd., inventor: SungChol Bae, and application date: July 29, 2003.

In addition, a method has also been provided in order to allow scenes to be aligned more smoothly in panorama photographing without using the subsidiary apparatus, in which the partial edge of a previously photographed image is displayed so as to properly overlap with an image to be currently photographed, so that a user can properly adjust a photographing position by matching the previously photographed image with the image to be currently photographed. An example of such technology in found in US publication No. 2004-0189849 (title: PANORAMIC SEQUENCE GUIDE, inventor: Gregory V Hofer, and application date: March 3, 2003).

Since such a panorama photographing work requires the user to be skilled in a more complex adjustment method than that of a single photographing work, a new photographing method which is easy in use and efficient is required.

### Summary of the Invention

The present invention has been made to solve the above-mentioned problems occurring in the prior art and provides additional advantages, by providing an apparatus and method for allowing the user to easily take a panoramic image through easier adjustment, and for providing a seamless panoramic image.

In accordance with one aspect of the present invention, there is provided a panoramic image photographing apparatus including a camera module for photographing an image of subject, an image processing unit for generating preview image data according to an operating mode for panoramic photographing by the camera module, a storage unit for storing data of an image panoramic-photographed from the preview image data, a controller for setting a portion of image data stored in the storage unit as a first guide region, setting a portion of the preview image data as a second guide region, and for calculating a degree of accordance between the first guide region and the second guide region and a display unit for displaying, together with the preview image data, the degree of accordance of the second guide region with the first guide region on one screen.

In accordance with another aspect of the present invention, there is provided a method for photographing a panoramic image, the method including the steps of photographing an image of a subject, when a photographing signal for a screen of preview image data is input in an operating mode for photographing a panoramic image, storing data of the photographed image, setting a portion of the stored image data as a first guide region according to an arrangement based on a panoramic scene construction setting, and loading the first guide region, setting a portion of preview image data to be currently photographed, which corresponds to the first guide region, as a second guide region, displaying the first guide region on one screen together with current preview image data by scrolling the first guide region in a direction opposite to a moving direction of the second guide region, determining if the second guide region is located in the first guide region, calculating a difference value of pixels between the first and second guide regions when the second guide region is located in the first guide region, and computing a percentage value according to a degree of accordance between the first and second guide regions and displaying the computed percentage value on one screen, together with a screen of the preview image data.

In one aspect, the method further includes a step of outputting an alarm when it is determined that the second guide region is not located in the first guide region.

### Brief Description of the Drawings

The above features and advantages of the present invention will be more apparent from the following detailed description taken in conjunction with the accompanying drawings, in which:
FIG 1 is a block diagram illustrating the configuration of a mobile terminal according to an embodiment of the present invention;
FIG 2 is an exemplary view illustrating the locations of guide screens in each scene when a panoramic image is photographed according to an embodiment of the present invention;
FIGs. 3A and 3B are views illustrating panoramic images representing overlapped states between scenes;
FIG 4 is a flowchart illustrating the operations of photographing a panoramic image according to an exemplary embodiment of the present invention;
FIGs. 5A and 5B are exemplary views illustrating an object to be photographed and photographing screens when a panoramic image is photographed according to an embodiment of the present invention; and
FIG 6 is a view illustrating a state of a screen in a display unit based on a panoramic image photographing method according to another embodiment of the present invention.

### Detailed Description of the Invention

An exemplary embodiment of the present invention is described with reference to the accompanying drawings. For the purposes of clarity and simplicity, a detailed description of known functions and configurations incorporated herein will be omitted as it may obscure the subject matter of the present invention.

The following description will be given about the case in which a panoramic image photographing apparatus according to the present invention is applied to a mobile terminal. In addition, the panoramic image photographing apparatus according to the present invention may be a digital camera, a personal digital assistant (PDA) equipped with a camera, a smart phone, a portable multimedia player (PMP), and other mobile communication terminals.

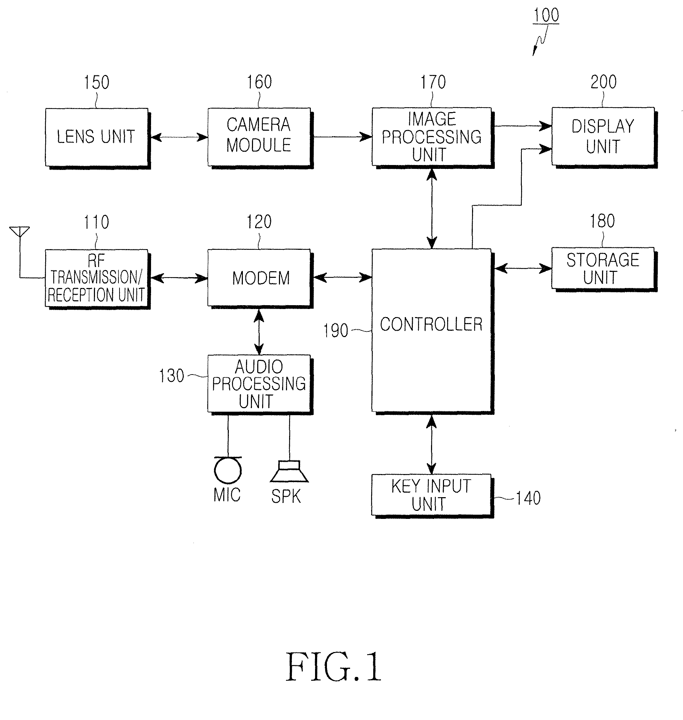

FIG 1 is a block diagram illustrating the configuration of a mobile terminal according to an embodiment of the present invention.

The mobile terminal 100 according to an embodiment of the present invention includes an RF transmission/reception unit 110, a modem 120, an audio processing unit 130, a key input unit 140, a lens unit 150, a camera module 160, an image processing unit 170, a storage unit 180, a controller 190 and a display unit 200.

In detail, the RF transmission/reception unit 110 functions to transmit/receive voice data, character data, image data and control data under the control of the controller 190. The RF transmission/reception unit 110 includes an RF transmitter and an RF receiver, in which the RF transmitter up-converts the frequency of a signal to be transmitted and amplifies the converted signal, and the RF transmitter low-noise amplifies a received signal and down-converts a frequency of the received signal.

The modem 120 includes a transmitter for encoding and modulating the signal to be transmitted through the RF transmission/reception unit 110, and a receiver for demodulating and decoding the signal received through the RF transmission/reception unit 110.

The audio processing unit 130 may include a codec, which contains a data codec for processing packet data and the like, and an audio codec for processing audio signals such as voice.

The audio processing unit 130 modulates an electrical signal input from a microphone so as to convert the electrical signal into voice data, and demodulates encoded voice data input from the RF transmission/reception unit 110 into an electrical signal and outputs the demodulated electrical signal to a speaker. In addition, preferably, the audio processing unit 130 includes a codec which converts a digital audio signal received through the RF transmission/reception unit 110 into an analog signal so as to reproduce the analog signal, and converts an analog audio signal generated from a microphone into a digital audio signal. Such a codec may be included in the controller 190.

The key input unit 140 has a key matrix structure (not shown) and includes letter keys, numeral keys, various function keys and an external volume key. The key input unit 140 generates a key signal corresponding to a key pressed by the user, and outputs the generated key signal to the controller 190.

In addition, the key input unit 140 is provided with operating keys for the camera module 160, such as a camera on/off key used to enter a camera mode, a zoom key used to adjust the zoom level (i.e., magnifying power) of a camera lens module, and a shutter key used to take a photograph. Input signals of the operating keys for the camera module 160 are output to the controller 190.

The camera module 160 includes the lens unit 150 capable of zooming in and out, and photographs an image through the lens unit 150. Also, the camera module 160 includes a camera sensor for converting a photographed optical signal into an electrical signal, and a signal processor for converting an analog image signal obtained through the photographing of the camera sensor into digital data. In addition, the camera module 160 may include an illumination sensor for measuring illumination, a distance sensor for measuring a focal distance to an object to be photographed, etc.

The image processing unit 170 functions to generate preview image data according to a panorama photographing operation mode of the camera module 160.

The image processing unit 170 functions to compress the preview image data output from the camera module 160 in a predetermined scheme so as to be suitable to the characteristic and size of the display unit 200, and functions to restore original image data from compressed image data. It is assumed that the image processing unit 170 has an On-Screen Display (OSD) function, and the image processing unit 170 can output preview image data according to the size of the screen on which an image is displayed by the controller 190.

The storage unit 180 may include a program memory and a data memory. The storage unit 180 stores various information necessary for the control of the operations of the mobile terminal according to an embodiment of the present invention, and various information selected by user.

For example, such information is set to be executed when a "panorama photographing mode" menu item in menus of a camera photographing menu is selected from among menu items for setting various functions for camera photographing in the mobile terminal 100. For such a menu selection operation, a corresponding menu item is displayed, in which a "panoramic scene construction setting" item for setting the construction of each scene is displayed on the display unit 200 so as to be selected by the user through the key input unit 140.

A construction and a program for recognizing key inputs of the user are included in the mobile terminal in advance. The storage unit 180 may store image data obtained through photographing in a camera mode (i.e., an image photographing mode), and may store programs for controlling the lens unit 150 including the camera lens module. In addition, the storage unit 180 stores information about zoom levels for photographing the image of the object for each screen size of the display unit 200 according to the distance between the camera and an object to be photographed.

The controller 190 generally controls the operations of the functional units so that the mobile terminal 100 can also perform the operations relating to a general mobile communication service. That is, the controller 190 receives an external photographing signal through the camera module 160, performs a processing operation according to the received signal, and outputs image output signals necessary for various operations, in addition to an image photographed by the camera, through the display unit 200. In this case, the controller 190 performs control operations to read contents to be output from the storage unit 180 and to stores contents in the storage unit 180 whenever the need arises.

In addition, the controller 190 shifts the operation mode of the mobile terminal 100 into a panorama photographing mode for an object to be photographed. Thus, when receiving the signal of a shutter key for image photographing, the controller 190 detects a distance between an object to be photographed and the camera included in the mobile terminal 100, and performs a control operation to photograph the image of the object at a zoom level corresponding to the detected distance.

The controller 190 sets a first guide region occupying "i pixels in the horizontal × j pixels in the vertical direction" on one side among the upper, lower, left and right sides of previous image data stored in the storage unit 180. In addition, the controller 190 sets a second guide region occupying "i pixels in the horizontal × j pixels in the vertical direction" on one side among the upper, lower, left and right sides of preview image data output from the image processing unit 170 for current photographing such that the second guide region corresponds to the first guide region.

Then, the controller 190 calculates a difference value of pixels between the first guide region and the second guide region, and displays a degree of accordance therebetween as a numerical value, such as a percentage value. In this case, for such a calculation, various algorithms capable of obtaining a degree of accordance between two images may be used. That is, the degree of accordance between two images may be calculated by using various distance calculation schemes, such as the Euclidean distance calculation scheme for RGB values of each pixel, the Minkowski metric or the city-block distance calculation scheme, or by using an image specific value comparison scheme, such as a color-information similarity checking scheme, a quality similarity checking scheme, or a form similarity checking scheme.

The display unit 200 may include a liquid crystal display (LCD). The display unit 200 displays digital image data obtained through photographing as well as messages referring to various operating states of a corresponding terminal under the control of the controller 190, and displays a degree of accordance between a first guide region and a second guide region of a preview image screen as a numerical value, such as a percentage value.

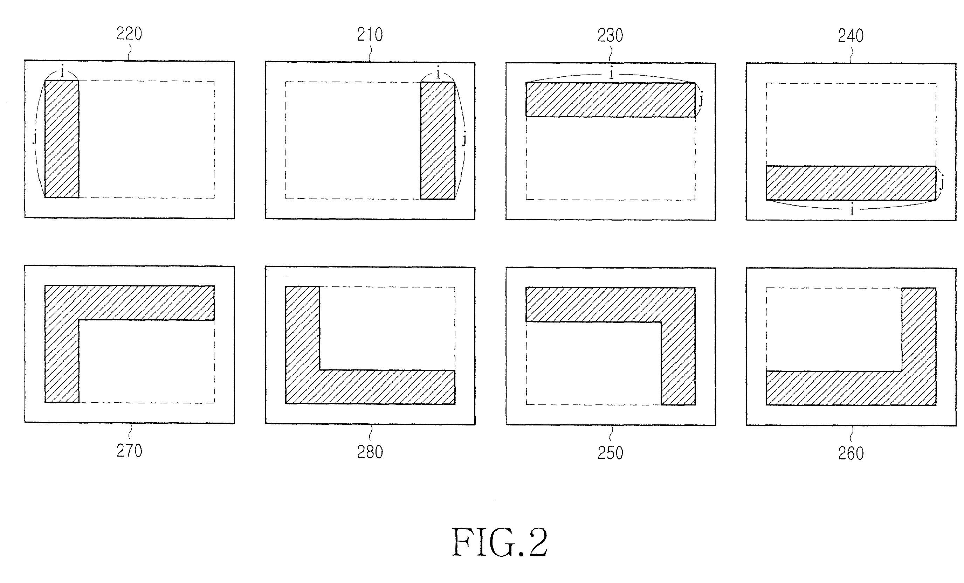

FIG 2 is an exemplary view illustrating the locations of guide screens in each scene when a panoramic image is photographed according to an embodiment of the present invention.

The guide screen may be formed to set and display a guide region occupying "i pixels in the horizontal × j pixels in the vertical direction" on one side, which corresponds to a current proceeding direction of photographing, among the upper, lower, left and right sides of corresponding image data in a first scene 210 to 280 having been previously photographed.

For example, when photographing is proceeding from the left side to the right side, a first guide region (oblique-lined portion) in image data of a first scene 210 having been previously photographed is set and displayed on the right side.

Also, when photographing is proceeding from the right side to the left side, from an upper side and a lower side, and from a lower side to an upper side, a first guide region (oblique-lined portion) in each previously photographed scene is shown as reference numerals 220, 230 and 240, respectively.

In this case, when there are a plurality of columns or rows of pixels, a first guide region (oblique-lined portion) may be set to include an image portion of the pixels existing in the same column or row in a previously-photographed first scene which are overlapped with those in a currently-photographed scene, in addition to one side of the previously-photographed first scene. In this case, the first guide regions (oblique-lined portions) of first scenes, which have been previously photographed, may be displayed as indicated by reference numerals 250, 260, 270 and 280.

Similarly, a second guide region (not shown) is set to occupy "i pixels in the horizontal × j pixels in the vertical direction" on one side among the upper, lower, left and right sides of preview image data a second scene to be currently photographed such that the second guide region corresponds to the first guide region (oblique-lined portions) of a first scene which has been previously photographed.

When each guide screen according to the present invention is displayed, a corresponding portion of the image of a first scene 210 to 280 having been previously photographed may be displayed as a corresponding guide screen without any change, or a proper image processing is performed with respect to the corresponding guide screen so as to distinguish the guide screen from an image currently output as a preview screen. That is, the guide region of a first scene 210 to 280 which has been previously photographed may be displayed transparently, or as a black-and-white color, or with a color highlighted so that the guide region can be displayed in a different color tone. For example, the red color of RGB may be highlighted so that the guide region becomes reddish, the green color of RGB may be highlighted so that the guide region becomes greenish, or the blue color of RGB may be highlighted so that the guide region becomes bluish.

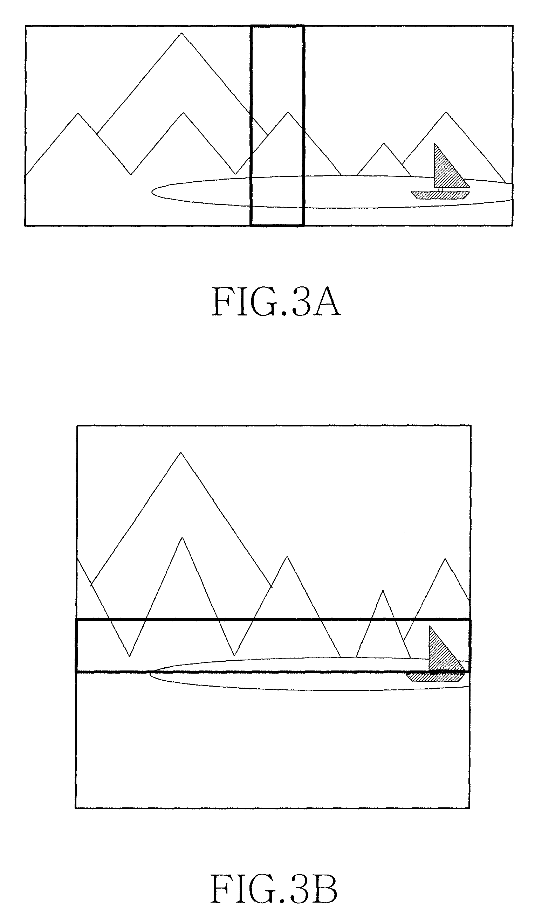

FIGs. 3A and 3B are views illustrating panoramic images representing overlapped states between scenes, in which FIG 3A shows a panoramic image photographed by interconnecting scenes in a horizontal direction, and FIG 3B shows a panoramic image photographed by interconnecting scenes in a vertical direction.

As shown in FIGs. 3A and 3B, when a panoramic image is photographed, the construction of scenes, that is, the construction of a panoramic image may be set to construct a plurality of scenes in a line either in a horizontal direction or in a vertical direction. In this case, while the number of scenes for constructing one panoramic image is set, the user may set the construction and the number of scenes for an object to be photographed as he/she desires.

Therefore, there is no limitation in the number of scenes photographed in the panoramic image photographing mode according to the present invention. Also, the user may select and determine a sequence of scenes to be photographed according to a spatial construction of the scenes.

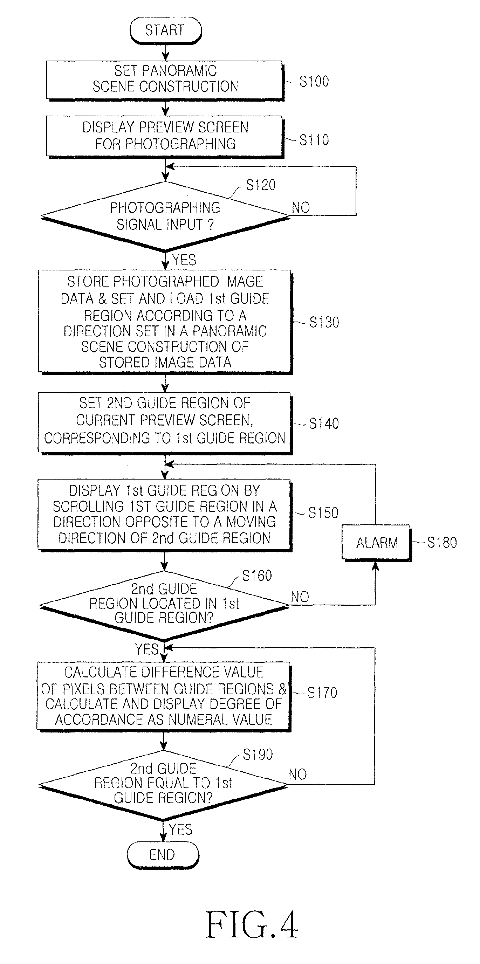

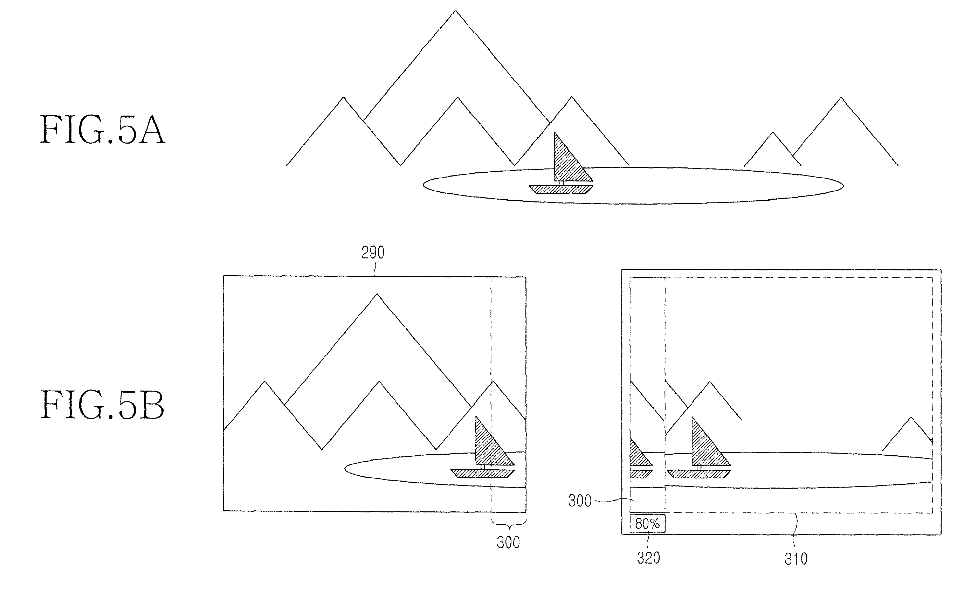

FIG 4 is a flowchart illustrating the operations of photographing a panoramic image according to an embodiment of the present invention. FIGs. 5A and 5B are exemplary views illustrating an object to be photographed and photographing screens when a panoramic image is photographed according to an embodiment of the present invention.

Referring to FIG 4, according to the operations in the panoramic image photographing mode based on an embodiment of the present invention, a basic condition selection operation for panoramic photographing is first performed to set conditions for an arrangement construction of scenes constructing a panoramic image based on the selections of the user.

That is, in order to construct a set of scenes, a "panoramic scene construction setting" item for setting an arrangement of scenes for a panoramic image to be photographed is displayed and set according to the user's selection through the key input unit 140 (step 100).

Then, a preview screen to be currently photographed is displayed (step 110). Next, when a photographing signal is input to the controller 190 from the key input unit 140 according to the adjustment of the user (step 120), a first scene is photographed. Thereafter, the image data of the first scene having been photographed is stored in the storage unit 180, "i pixels in the horizontal × j pixels in the vertical direction" (e.g., "2×4 pixels") on the right side of the stored image data of the first scene are set as a first guide region according to an arrangement set through the "panoramic scene construction setting" item, and then the stored image data are loaded (step 130). In a different way, a range of "i pixels in the horizontal × j pixels in the vertical direction" may be input through the key input unit 140 by the user so as to be set as the first guide region.

When the preview screen is moved in order to photograph a second scene for the panoramic image, which the user is to currently photograph, "i pixels in the horizontal × j pixels in the vertical direction" on the left side of the preview screen corresponding to the range of the first guide region are set as a second guide region (step 140). Then, since the direction of the first guide region is reversely applied, the first guide region of the first scene having been photographed is scrolled in a direction opposite to the moving direction of the second guide region and is displayed in the display unit 200 (step 150).

FIG 5A shows an object to be photographed, such as a natural landscape, and FIG. 5B shows photographing screens in photographing a panoramic image of a photographing target. In FIG 5B, the photographing screens 290 and 310 include a stored screen 290 of an already-photographed first scene and a preview screen 310 of a second scene to be currently photographed, respectively.

Referring to FIG 5B, it can be recognized that in the preview screen 310 of the second scene to be currently photographed, a first guide region portion of a corresponding connection part on the left side of the preview screen 310 in a direction connected (i.e., scrolled) to the stored screen 290 of the first scene is displayed as a guide screen 300. That is, when photographing is proceeding from the left side to the right side, the guide screen 300 of a corresponding first guide region is displayed on the left side of the preview screen 310 for the second scene.

In step 150 (Figure 4), when the second guide region of the preview screen 310 to be currently photographed exists in the first guide region displayed in the display unit 200 (step 160), the controller 190 calculates a difference value of pixels between the first guide region and the second guide region. The difference value of pixels calculated in such a manner is used to calculate a degree of accordance between the first guide region and the second guide region of the preview screen 310, which is to be currently photographed, as a numeral value such as a percentage value 320, and then is displayed on the display unit 200 (step 170). Therefore, with reference to the percentage value displayed on a screen of the display unit 200, the user can adjust the second guide region of the preview screen 310, which is to be currently photographed, such that the second guide region accords with the corresponding guide screen 300, which is the first guide region.

In contrast, in the step 150, when the second guide region of the preview screen 310 to be currently photographed does not exist in the first guide region displayed in the display unit 200, an alarm is output through the audio processing unit 130 (step 180), and then step 150 is performed again. Thereafter, step 180 is repeatedly performed until the second guide region becomes equal to the guide screen 300 displayed on the left side of the current preview screen (step 190).

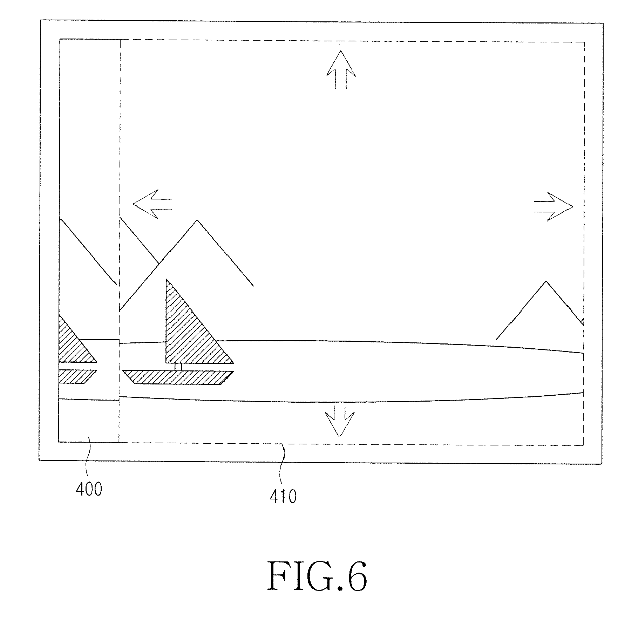

FIG 6 is a view illustrating a state of a screen in a display unit based on a panoramic image photographing method according to another embodiment of the present invention.

First, referring to FIG 6, it can be understood that a guide screen 400 is displayed on one side of a preview screen 410 as soon as one scene has been photographed during a panoramic image photographing.

A detailed description of the same procedure as that described with reference to FIG 4 will be omitted. In relation to a difference value of pixels between a displayed guide screen 400 and a second guide region of a preview screen 410 to be currently photographed, a direction according to the degree of accordance of the second guide region of the preview screen 410 to be currently photographed with the corresponding guide screen 400 may be displayed as a separate directional arrow. Herein, the directional arrow represents the motion vector of the second guide in the current preview screen 410.

Therefore, the user can adjust the second guide region of the preview screen 410 to be currently photographed so that the second guide region can accord with the corresponding guide screen 400, and thus it is possible to photograph a seamless panoramic image.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

As describe above, the present invention enables the user to easily photograph a panoramic image in a simple adjustment, and can provide a seamless panoramic image.

While the present invention has been shown and described about a panoramic image photographing apparatus and method according to certain preferred embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A panoramic image photographing apparatus comprising:
a camera module (130) for photographing a subject image;
a storage unit (180) for storing the image data;
an image processing unit (170) for generating preview image data according to an operating mode for panoramic photographing by the camera module (130);
a controller (190) for setting a portion of the image data stored in the storage unit (180) as a first guide region, setting a portion of the preview image data as a second guide region, and for determining a degree of accordance between the first guide region and the second guide region; and
a display unit (200) for displaying the degree of accordance of the second guide region with the first guide region on one screen.

2. The apparatus as claimed in claim 1, wherein the controller (190) sets regions including at least one pixel in the image data as the first guide region and second guide region.

3. The apparatus as claimed in claim 2, wherein each of the regions including pixels includes an area having a size of "a number of pixels in a horizontal direction × a number of pixels in a vertical direction" on at least one portion among upper, lower, left and right side portions of the image data.

4. The apparatus as claimed in claim 1, wherein the controller (190) calculates a difference value of pixels between the first guide region and the second guide region, and computes a degree of accordance between the two regions as a numeral value.

5. The apparatus as claimed in claim 4, wherein the difference value of pixels is calculated by checking a degree of accordance between the first and second guide regions by means of at least one algorithm selected from the group consisting of: Euclidean distance calculation scheme for RGB values of each pixel, a Minkowski metric, and a city-block distance calculation scheme.

6. The apparatus as claimed in claim 3, wherein the difference value of pixels is calculated by comparing specific values of the first and second guide regions by means of one scheme selected from the group consisting of: a color-information similarity checking scheme, a quality similarity checking scheme, and a form similarity checking scheme.

7. The apparatus as claimed in claim 3, wherein the numeral value is expressed as a percentage value or an alarm.

8. The apparatus as claimed in claim 1, wherein the display unit (200) displays a numeral value corresponding to the degree of accordance of the second guide region with the first guide region on one screen, together with the preview image data.

9. The apparatus as claimed in claim 2, wherein the controller (190) calculates a difference value of pixels between the first and second guide regions, and computes a directional arrow according to the degree of accordance between the first and second guide regions.

10. The apparatus as claimed in claim 9, wherein the display unit (200) displays the directional arrow according to the degree of accordance between the first and second guide regions on one screen, together with the preview image data.

11. A method for photographing a panoramic image, the method comprising the steps of:
photographing an image of a subject,
receiving a photographing signal for a screen of preview image data;
storing data of the photographed image, setting a portion of the stored image data as a first guide region according to an arrangement based on a panoramic scene construction setting, and loading the first guide region;
setting a portion of the preview image data to be currently photographed which corresponds to the first guide region, as a second guide region;
displaying, together with current preview image data, the first guide region on one screen by scrolling the first guide region in a direction opposite to a moving direction of the second guide region;
determining if the second guide region is located in the first guide region;
calculating a degree of accordance between the first and second guide regions when the second guide region is located in the first guide region; and
displaying the degree of accordance of the second guide region with the first guide region on one screen, together with the preview image data.

12. The method as claimed in claim 11, wherein the photographing step comprises the steps of:
setting a panoramic scene construction for an arrangement structure of scenes constructing the panoramic image; and
displaying a screen of the preview image data photographed according to the panoramic scene construction.

13. The method as claimed in claim 11 or 12, wherein, in the step of setting the first guide region, a first area including at least one pixel in the stored image data is set as the first guide region.

14. The method as claimed in claim 13, wherein the first area including said at least one pixel includes an area having a size of "a number of pixels in a horizontal direction × a number of pixels in a vertical direction" on at least one portion among upper, lower, left and right side portions of the stored image data.

15. The method as claimed in any one of claims 11 to 14, wherein, in the step of setting the second guide region, a second area including at least one pixel in the preview image data is set as the second guide region.

16. The method as claimed in claim 15, wherein the second area including said at least one pixel includes an area having a size of "a number of pixels in a horizontal direction × a number of pixels in a vertical direction" on at least one portion among upper, lower, left and right side portions of the preview image data.

17. The method as claimed in any one of claims 11 to 16, wherein, in the calculating step, a difference value of pixels between the first and second guide regions is calculated and computed as a percentage value according to the degree of accordance.

18. The method as claimed in claim 17, wherein in the step of displaying the degree of accordance, the computed percentage value is displayed on one screen, together with a screen of the preview image data.

19. The method as claimed in any one of claims 11 to 18, further comprising a step of outputting an alarm when it is determined that the second guide region is not located in the first guide region.

20. The method as claimed in any one of claims 11 to 19, wherein the step of displaying the degree of accordance is repeatedly performed until the second guide region becomes equal to the first guide region.

21. The method as claimed in any one of claims 11 to 20, further comprising the steps of:
calculating a difference value of pixels between the first and second guide regions when the second guide region is located in the first guide region, and computing a directional arrow according to a degree of accordance between the first and second guide regions; and
displaying the computed directional arrow on one screen, together with a screen of the preview image data.
